# EUROPEAN PATENT APPLICATION

(11) **EP 0 933 544 A1**
(43) Date of publication of application: **04.08.1999**
(21) Application number: 98940577.4
(22) Date of filing: 27.08.1998
(51) Int. Cl.: F16C 29/06

(54) **ROLLING MOTION GUIDE**

(30) Priority: 28.08.1997 JP 24599897
(71) Applicant: THK CO., LTD., Shinagawa-ku, Tokyo 141-0031 (JP)
(72) Inventor: SHIRAI, Takeki, Shinagawa-ku, Tokyo 141-0031 (JP); MICHIOKA, Hidekazu, Shinagawa-ku, Tokyo 141-0031 (JP); KONOMOTO, Masashi, Shinagawa-ku, Tokyo 141-0031 (JP)
(74) Representative: Brunner, Michael John
(86) International application number: JP9803813
(87) International publication number: WO9911941

(57) **Abstract**

A rolling motion guide provided with a track rail (2) provided with load rolling body rolling portions (41, 51, 61) on the top surface and both side surfaces thereof, a moving block (3) having a horizontal section (8) and sleeve sections (9, 9), on each of which load rolling body rolling portions (42, 52, 62) are provided to correspond to the load rolling body rolling portions of the track rail (2), and a multiplicity of rolling bodies (4, 5, 6) rollingly interposed between the load rolling body rolling portions of the track rail and the load rolling body rolling portions of the moving block, wherein contact angle forming lines (S2, S3) are inclined downward toward the track rail (2), the lines (S2, S3) being defined by connecting points of contact between the rolling bodies (5, 6) disposed on the respective sides of the track rail (2) and a pair of the load rolling body rolling portions (51, 52; 61, 62), which interpose therebetween the rolling bodies, in a state where a compressive load acts between the moving block (3) and the track rail (2).

## Description

### Technical Field

The present invention relates to a rolling motion guide device for extra-heavy load to be used for a seismic isolation guide of an architectural structure.

### Background Art

A conventional rolling motion guide device for a heavy-load comprises a track rail and a movable block. The movable block is provided with a horizontal portion opposing to an upper surface of the track rail and a pair of skirt portions opposing to both side surfaces of the track rail. A loaded roller rolling surface is formed on each of the upper surface of the track rail and the horizontal portion of the movable block, and rollers are disposed between the opposing roller rolling surfaces. A loaded ball rolling groove is formed on each of inner side surfaces of the skirt portion and side surfaces of the track rail, and balls are disposed between the opposing rolling surfaces.

However, when the conventional rolling motion guide device described above is used as the seismic isolation guide for an architectural structure, an axial load applied so as to compress the horizontal portion and the track rail is extremely large, so that a load bearing ability is not sufficient.

Further, the balls disposed to the side surface portions of the conventional device support only a lifting load applied from a lower direction, and the balls do not support a load applied from an upper side thereof.

### Disclosure of The Invention

An object of the present invention is to provide a rolling motion guide device which is excellent in load bearing ability with respect to a compressive load applied so as to mutually press the movable block and the track rail.

In order to achieve the above-mentioned object, the rolling motion guide device according to the present invention is constructed so as to comprise:
a track rail having an upper surface and both side surfaces each of which is formed with a loaded rolling member rolling portion;
a movable block having a horizontal portion and skirt portions, each of the horizontal portion and the skirt portions is formed with a loaded rolling member rolling portion corresponding to the loaded rolling member rolling portion formed on the track rail; and
a number of rolling members disposed to be rollable between the loaded rolling member rolling portion formed on the track rail and the loaded rolling member rolling portion formed on the movable block;
   wherein a contact angle line, which is defined as a line connecting contact points at which each of the rolling members disposed to each side surface of the track rail and a pair of loaded rolling member rolling portions clamping the rolling member are contacted when a compressive load is applied to the movable block and the track rail, is downwardly inclined toward the track rail.

According to the structure described above, the compressive load applied so as to press the horizontal portion of the movable block is received by the rolling member disposed between the horizontal portion of the movable block and the upper surface of the track rail and by the rolling member disposed between the skirt portions of the movable block and both the side surfaces of the track rail. That is, all of the rolling members bears the compressive load, so that an allowable load with respect to
the compressive load can be remarkably increased.

When the compressive load is applied, the skirt portions of the movable block are deformed in a direction so as to be opened by a horizontal component force of a contacting reaction force applied to the movable block from the rolling member positioned at the side surfaces of the track rail. As a result, a distribution of the loads to be born by the respective rolling members is stabilized.

That is, in a rolling motion guide device to which the present invention is applied, it is ideal that both the rolling members disposed at the upper surface of the track rail and the rolling members disposed at the side surfaces of the track rail are simultaneously contacted to the track rail and the movable block thereby to support the load. However, in actual, for example, the rolling members disposed at the side surfaces of the track rail are contacted in advance to the track rail and the movable block due to an assembling error or the like. As a result, the rolling member disposed at the upper surface of the track rail is lifted up thereby to cause, so called, a non-uniformly contacting state.

Even in such a case, when the compressive load is applied, the skirt portions are deformed to be opened by the contacting reaction force of the rolling members disposed at the side surfaces of the track rail, and the horizontal portion is deformed to be recessed. Therefore, the rolling members disposed at the upper surface of the track rail securely receives the compressive load. As a result, the load distribution can be stabilized.

A load applied to the movable block in a lateral direction is supported by the rolling member disposed between the side surfaces of the track rail and the skirt portions of the movable block.

The device may also be constructed so that a plural rows of balls are provided as rolling members to be disposed between the upper surface of the track rail and the horizontal portion of the movable block, a loaded rolling member rolling portion clamping the balls is formed as a loaded ball rolling groove, at least one row of balls is provided as rolling members to be disposed between the side surfaces of the track rail and the skirt portions of the movable block, and a loaded rolling member rolling portion clamping the balls is formed as a loaded ball rolling groove.

As described above, when the rolling members to be disposed at the upper surface of the track rail are balls, a lateral load is received by both the balls interposed at the horizontal portion side and the balls interposed at the skirt portion side.

Further, when a tension load is applied in a direction for separating the horizontal portion of the movable block from the upper surface of the track rail, the load is received by the balls disposed between the side surfaces of the track rail and the skirt portions of the movable block.

In addition, when the balls are used as the rolling member, a working error concerning a degree of parallelization between a lower surface of the track rail and the upper surface of the movable block and an error in parallelism between a base to which the track rail is mounted and an attaching surface of the structures such as building or the like to which the movable block is fixed, can be corrected by a displacement of a contact point of the loaded ball rolling groove and the ball.

The device may also be constructed so that a plural rows of rollers are provided as rolling members to be disposed between the upper surface of the track rail and the horizontal portion of the movable block, a loaded rolling member rolling portion clamping the rollers is formed as a loaded roller rolling surface, at least one row of balls are provided as rolling member to be disposed between the side surfaces of the track rail and the skirt portions of the movable block, and a loaded rolling member rolling portion clamping the balls is formed as a loaded ball rolling groove.

In this case, though the rollers disposed at the upper surface of the track rail cannot receive the lateral load, an allowable value of the compressive load can be increased in comparison with a case where the balls are used.

The rolling motion guide device may also be constructed so that at least one loaded ball rolling groove is formed to be a circular-arc groove having a single circular-arc shape in section.

In case of the circular-arc groove, the ball and a pair of the loaded ball rolling grooves are contacted at two points. In a case where a tension load is applied to a portion between the track rail and the movable block, the contact points, at which the ball disposed at side surfaces of the track rail and the loaded ball rolling grooves clamping the ball are contacted, is displaced, whereby a contact angle line connecting the contact points is upwardly inclined toward the track rail. Accordingly, both loads of the compressive load and the tension load can be received.

The rolling motion guide device may also be constructed so that at least one loaded ball rolling groove is formed to be a gothic-arch groove having a shape in cross section formed by combining two circular-arcs.

In the case of the gothic-arch groove, the ball and a pair of the loaded ball rolling grooves clamping the balls are contacted at four points, so that two contact angle lines are defined with respect to one ball. When one contact angle line is set to be downwardly inclined toward the track rail while the other contact angle lines are set to be upwardly inclined toward the track rail, both loads of the compressive load and the tension load can be received.

The track rail may be formed as a linear rail or may be formed as a curved rail formed by bending the rail in a vertical direction so as to have a circular-arc shape.

### Brief Description of The Drawings

FIG. 1 is a cross sectional view showing a rolling motion guide device according to a first embodiment of the present invention, the cross section being taken in a direction normal to a track rail of the device.
FIG. 2 is a perspective view, partially in section, of the device shown in FIG. 1.
FIG. 3 is a side view, partially in section, of the device shown in FIG. 1.
FIG. 4 is a plan view, partially in section, of the device shown in FIG. 1.
FIG. 5 is a view showing a state when a tension load is applied to the device shown in FIG. 1.
FIG. 6 is a view showing a contacting state where a groove having a gothic-arch shape and a ball are contacted to each other.
FIG. 7 is a perspective view, partially in section, showing a modification in which a track rail used in the device shown in FIG. 1 is bent.
FIG. 8 is a front view showing an example of a guide mechanism formed by combining two sets of the rolling motion guide devices, the mechanism using the device shown in FIG. 7 as the respective guide device.
FIG. 9 is a cross sectional view showing a rolling motion guide device according to a second embodiment of the present invention, the cross section being taken in a direction normal to a track rail of the device.
FIG. 10 is a perspective view, partially in section, of the device shown in FIG. 9.
FIG. 11 is a side view, partially in section, of the device shown in FIG. 9.
FIG. 12 is a plan view, partially in section, of the device shown in FIG. 9.
FIG. 13 is a view showing a state when a tension load is applied to the device shown in FIG. 9.
FIG. 14 is a view showing a contacting state where a groove having a gothic-arch shape and a ball are contacted.
FIG. 15 is a perspective view, partially in section, showing a modification in which a track rail used in the device shown in FIG. 9 is bent.

### Best Mode for Embodying The Invention

### First Embodiment

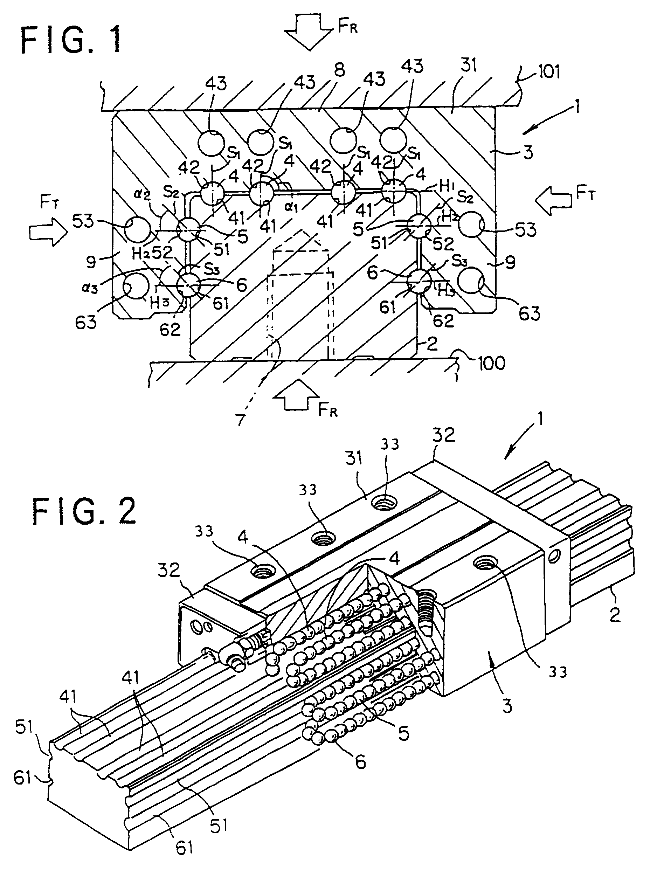

FIGs. 1 to 4 respectively show a linear motion guide device as a rolling motion guide device according to a first embodiment of the present invention.

This linear motion guide device 1 comprises a track rail 2 linearly extending, a movable block 3 which is movable along the track rail 2, four rows of upper surface side balls 4 ...4 disposed at an upper surface of the track rail 2, and two rows of side surface side balls 5...5 and 6...6 disposed at each of right and left side surfaces of the track rail 2.

The track rail 2 has a rectangular shape in section. The upper surface of the track rail 2 is formed with four lines of loaded ball rolling grooves 41...41, while each of the right and left side surfaces of the track rail 2 is formed with two lines of loaded ball rolling grooves 51 and 61. These loaded ball rolling grooves 41, 51 and 61 correspond to the loaded rolling member rolling portions. Each of the rolling grooves 41, 51 and 61 is linearly extending in a longitudinal direction of the track rail 2.

The loaded ball rolling grooves 41 formed on the upper surface of the track rail 2 are formed in such a manner that two lines of rolling grooves are formed on each of the right and left upper surface of the track rail 2 so that the respective two lines of the rolling grooves are symmetric to each other with respect to a center line in a width direction (right and left directions in FIG. 1) of the track rail 2. The track rail 2 is formed with a screw bore 7...7 for attaching the track rail 2. When a bolt is screwed into the screw bore 7 from a side of a base 100,the track rail 2 is fixed to the base 100.

Each of the loaded ball rolling grooves 41 is, so called, a circular-arc groove having a single circular-arc shape in section.

On the other hand, the movable block 3 comprises a horizontal portion 8 opposing to the upper surface of the track rail 2 and a pair of skirt portions 9, 9 downwardly extending from the horizontal portion 8 and opposing to the right and left side surfaces of the track rail 2.

The lower surface of the horizontal portion 8 is formed with four lines of loaded ball rolling grooves 42...42 corresponding to the loaded ball rolling grooves 41...41 formed on the upper surface of the track rail 2. On the other hand, each of inner side surfaces of the skit portions 9 is formed with two lines of loaded ball rolling grooves 52 and 62 corresponding to the loaded ball rolling grooves 51 and 61 formed on the side surfaces of the track rail 2. Each of the loaded ball rolling grooves 42, 52 and 62 is linearly extending.

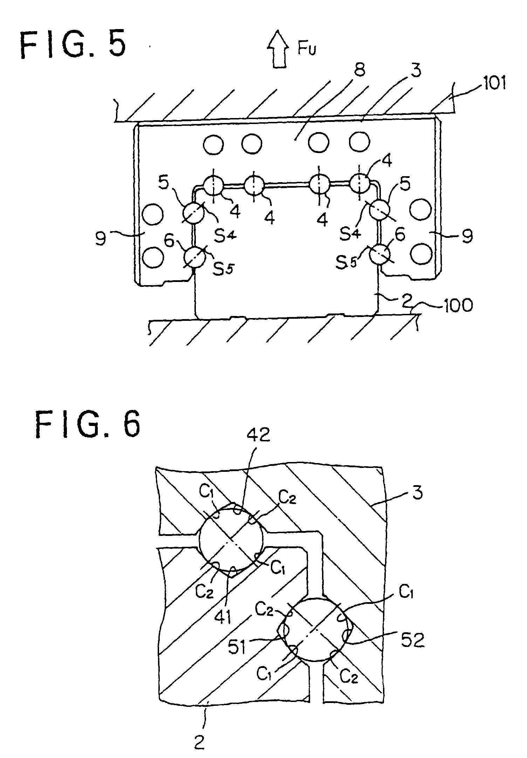

Each of the loaded ball rolling grooves 52 and 62 is, so called, a circular-arc groove having a single circular-arc shape in section. A cross sectional shape of each loaded ball rolling grooves 51, 52, 61 and 62 may also be formed so as to provide a gothic-arch grooved shape formed by combining two circular-arcs C1, C2 as shown in FIG. 6.

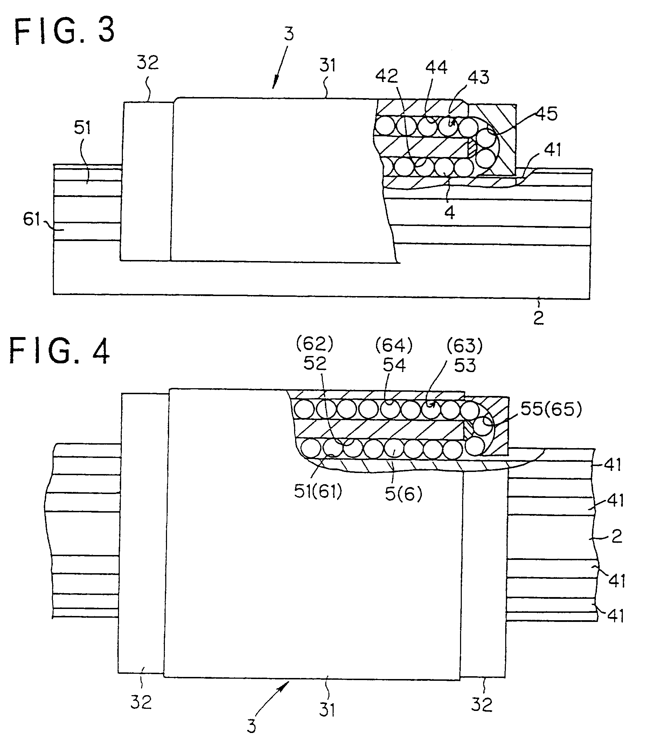

As shown in FIGs. 1 and 3, the movable block 3 is provided with a ball returning passage 43 for returning the respective upper surface side ball 4 from one end to the other end of the loaded ball rolling grooves 42. Further, as shown in FIGs. 1 and 4, the movable block 3 is provided with ball returning passages 53 and 63 for returning the respective side surface side ball 5 and 6 from one end to the other end of the loaded ball rolling grooves 52 and 62. The ball returning passages 43, 53 and 63 constitute, so called, an unloaded region where a load is not applied to each of the balls 4, 5 and 6.

The ball returning passages 43 comprise a ball escape bore 44 extending in parallel with the loaded ball rolling grooves 41 and direction changing passages 45, 45 for changing a rolling direction of the ball 4 so as to trace U-shape by connecting an end portion of the loaded ball rolling grooves 41 to an end portion of the ball escape bore 44.

As shown in FIG. 4, the ball returning passages 53 and 63 comprise ball escape bores 54 and 64 extending in parallel with the loaded ball rolling grooves 52 and 62 and direction changing passages 55 and 65 for changing a rolling direction of each of the balls 5 and 6 so as to trace U-shape by connecting end portions of the loaded ball rolling grooves 52 and 62 to end portions of the ball escape bores 54 and 64. In FIG. 4, an illustration of the ball returning passage 63 is omitted, and a parenthesized reference character of the ball returning passage 63 is indicated to a corresponding portion of the ball returning passage 53. A loaded ball rolling passage is formed at each of portions between the loaded ball rolling grooves 51 and 52 and between the loaded ball rolling grooves 61 and 62. These loaded ball rolling passages, the direction changing passages 55 and 65 and the ball escape bores 54 and 64 are combined thereby to constitute the respective endlessly circulating passages for the balls 5 and 6.

The movable block 3 comprises a block body 31 formed of metal and end plates 32, 32 attached to both end portions of the block body 31. The block body 31 is formed with the loaded ball rolling grooves 42, 52 and 62 and the ball escape bores 44, 54 and 64, while each of the end plates 32 is formed with the direction changing passages 45, 55 and 65. Each of the ball escape bores 44, 54 and 64 linearly passes through the block body 31.

As shown in FIG. 1, assuming that a contact angle line S1 is defined by a line connecting the contact points at which the upper surface side balls 4 are contacted to the ball rolling grooves 41 and 42, a contact angle α1, which is formed by the contact angle line S1 and a horizontal line H1 passing through a center of the ball 4, is set to almost 90 degrees, and the ball escape bore 44 is provided on the contact angle line S1. The contact angle α1 may be one which is different from 90 degrees in angles.

In FIG. 1, assuming that a contact angle line S2 is defined by a line connecting the contact points at which the side surface side ball 5 and the loaded ball rolling grooves 51 and 52 are contacted, and that a contact angle line S3 is defined by a line connecting the contact points at which the side surface side ball 6 and the loaded ball rolling grooves 61 and 62 are contacted, each of the contact angle lines S2, S3 is downwardly inclined toward a center of the track rail 2. Each of the ball escape bores 54 and 64 takes the same elevation as that of the loaded ball rolling grooves 52 and 62. That is, each of the ball escape bores 54 and 64 is positioned on the horizontal lines H2, H3 passing through a center of the balls 5 and 6. Further, each of the horizontal lines H1, H2, H3 is a line extending on a cross sectional area normal to the track rail and extending in a direction parallel with the upper and lower surfaces of the track rail 2.

Each of contact angle α2 and contact angle α3,which is defined by the contact angle lines S2, S3 and the horizontal lines H2, H3, is set to be equal to each other, for example, to 45 degrees. However, the contact angles α2 and α3 are not limited to 45 degrees and may variously changed. For example, the contact angle may be changed within a range of 40 to 50 degrees.

It is preferable to set a radius of curvature of each of the loaded ball rolling grooves 41, 42, 51, 52, 61 and 62 to within a range of 0.52 times smaller than each of the diameters of the balls 4, 5 and 6, and the radius of curvature may be more preferably be set to within a range of 0.52 to 0.505 times smaller, thereby to impart a damping property. Even in a case where the contact angle becomes, for example, 45 to 60 degrees, a depth of each of the rolling grooves is set to a value within a range so that a contacting range of the ball and the loaded ball rolling groove would not interfere with a groove end periphery of the rolling groove.

The diameters of the balls 5 and 6 are equal to each other, and the curvature radiuses of the loaded ball rolling grooves 51, 52, 61 and 62 are equal to each other.

The linear motion guide device described above is used as a seismic isolation guide of, for example, architecture. In this case, the track rail 2 is fixed to abase 100, while a structure 101 such as building is fixed to the movable block 3.

When a load to be applied so as to press the horizontal portion 8 of the movable block 3 toward the track rail 2 is defined as a compressive load FR, the compressive load FR is received by all of eight rows in total of balls consisting of four rows of balls 4...4 disposed between the horizontal portion 8 of the movable block 3 and the upper surface of the track rail 2 and four rows of balls 5...5 and 6...6 disposed between the right and left skirt portions 9, 9 of the movable block 3 and both the side surfaces of the track rail 2. Accordingly, an allowable load for the device 1 with respect to the compressive load FR can be remarkably increased.

When the compressive load FR is applied, the skirt portions 9 are deformed in a direction so as to be opened. Namely, the skirt portions 9 are deformed in a direction so as to be apart from the track rail 2.Accordingly, it becomes possible to stabilize a distribution of the loads to be born by the respective balls 4...4 disposed at the upper surface side of the track rail 2 and balls 5...5 and 6...6 disposed at the side surface side of the track rail 2.

That is, in the linear motion guide device 1, it is ideal that all of the balls 4...4 disposed at the upper surface of the track rail 2 and the balls 5...5, 6...6 disposed at the side surfaces of the track rail 2 are simultaneously contacted to the track rail 2 and the movable block 3 thereby to support the load. However, in actual, for example, the balls 5...5 and 6...6 disposed at the side surfaces of the track rail 2 are contacted in advance to the track rail 2 and the movable block 3 due to an assembling error or the like. As a result, the balls 4...4 are lifted up thereby to cause, so called, a non-uniformly contacting state.

Even in such a case, when the compressive load FR is applied, the skirt portions 9, 9 are deformed to be opened by the contacting counter force of the balls 5 and 6 disposed at the side surfaces of the track rail 2, and the horizontal portion 8 is deformed to be recessed. Therefore, the balls 4...4 disposed at the upper surface of the track rail 2 securely receives the compressive load FR. As a result, the load distribution can be stabilized.

A lateral load FT is received by the balls 5...5 and 6...6 disposed at the side surfaces of the track rail 2.

Further, when a tension load FU is applied in a direction for separating the horizontal portion 8 of the movable block 3 from the upper surface of the track rail 2, the contact points at which the side surface side balls 5 and 6 and the loaded ball rolling grooves 51 and 61 are contacted are displaced, so that the contact angle lines S4, S5 are upwardly inclined toward the track rail 2 as shown in FIG. 5. Under this condition, the tension load FU is received.

In the case of the gothic-arch groove, as shown in FIG. 6, the load can be supported by a first circular-arc C1 and a second circular arc C2 of the respective loaded ball rolling grooves 51, 52, 61 and 62.

Accordingly, the device has an ability to bear the lateral load FT and the tension load FU in a direction for separating the horizontal portion 8 of the movable block 3 from the upper surface of the track rail 2. In addition, it becomes possible to increase the allowable load with respect to the compressive load FR in a direction for pressing the horizontal portion 8 of the movable block 3 toward the upper surface of the track rail 2.

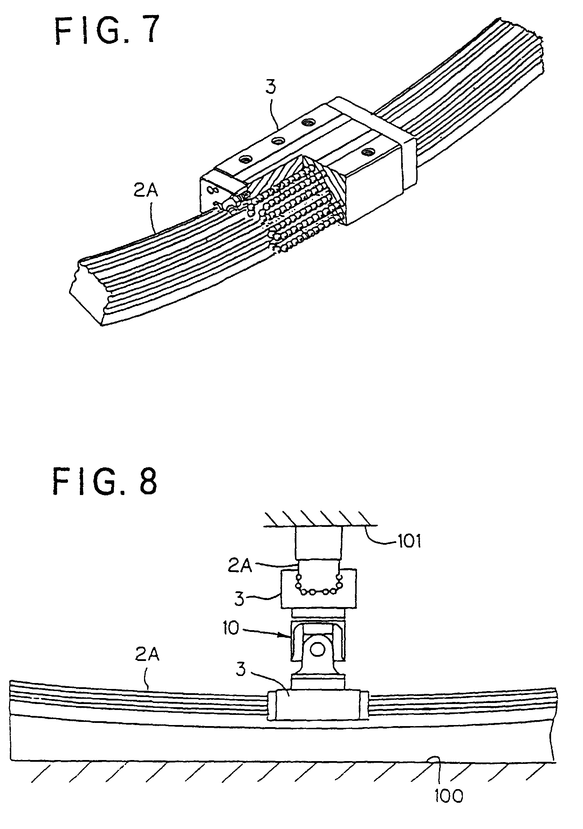

Although the present invention has been explained in a case where the track rail 2 is a linear rail, as shown in FIG. 7, the present invention is also applicable to a curve-motion guide device having a track rail 2A vertically bent so as to have a circular-arc shape. The curve-motion guide device is different from the linear motion guide device in a point of having a function of determining a characteristic frequency of a building on the basis of a radius of the track rail 2A regardless of weight of the building.

In this case, the upper and lower surfaces of the track rail 2A are bent so as to have a circular-arc shape, while the side surfaces thereof are positioned in a vertical surface. The lower surface of the horizontal portion 8 of the movable block 3, which is oppose to the upper surface of the track rail 2A, is bent in a circular-arc shape so as to form a concentric circle with respect to the upper surface of the track rail 2. The loaded ball rolling grooves 41 and 42 (see FIG. 1) in which the upper surface portion balls 4 are rolling are bent so as to have a circular-arc shape along the upper surface of the track rail 2 and the horizontal portion 8 of the movable block 3. The loaded ball rolling grooves 51, 52, 61 and 62 (see FIG. 1) in which the side surface side balls 5 and 6 are rolling are bent so as to have a circular-arc shape on a vertical surface.

The arrangements and functions of elements or parts of the curve-motion guide device shown in FIG. 7 other than those described above are substantially the same as those in the linear motion guide device shown in FIGs. 1 to 4. Therefore, these elements or parts are not described herein by adding the same reference numerals to the corresponding elements or parts.

As shown in FIG. 8, the present invention can also be applicable to a guide mechanism in which two sets of the curve-motion guide devices are combined.

In this guide mechanism, a pair of the curve-motion guide devices are arranged in two directions, and more specifically, the devices are crosswise arranged in directions normal to each other. Each of the curve-motion guide devices has the same structure as that shown in FIG. 7. The respective movable blocks 3, 3 are connected back to back with each other by an inclining device 10. The inclining device 10 is capable of inclining in at least the direction toward the track rails 2A, 2A. According to this structure, even if the movable block 3 moves on the track rail 2A so as to draw a circular-arc shape, the architecture 101 and the base 100 are normally maintained to be in parallel with each other.

### Second Embodiment

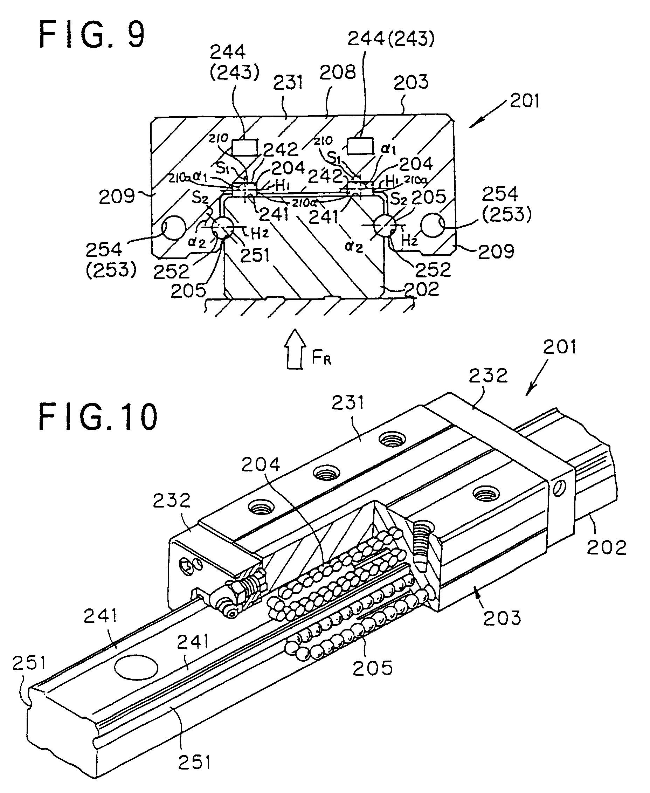

FIGs. 9 and 10 respectively show a linear motion guide device as a rolling motion guide device according to a second embodiment of the present invention.

This linear motion guide device 201 comprises a track rail 202, a movable block 203 which is movable along the track rail 202, two rows of upper surface side rollers 204 ...204 disposed at an upper surface of the track rail 202, and one row of side surface side balls 205...205 disposed at each of the right and left side surfaces of the track rail 202.

The track rail 202 has a rectangular shape in section. The upper surface of the track rail 202 is formed with two lines of loaded roller rolling surfaces 241, 241, while each of the right and left side surfaces of the track rail 202 is formed with one line of loaded ball rolling grooves 251, 251. These loaded roller rolling surface 241 and the loaded ball rolling grooves 251 correspond to the loaded rolling member rolling portions.

The loaded roller rolling surfaces 241, 241 formed on the upper surface of the track rail 2 are formed so as to be adjacent to the right and left side peripheries of the upper surface of the track rail 202.

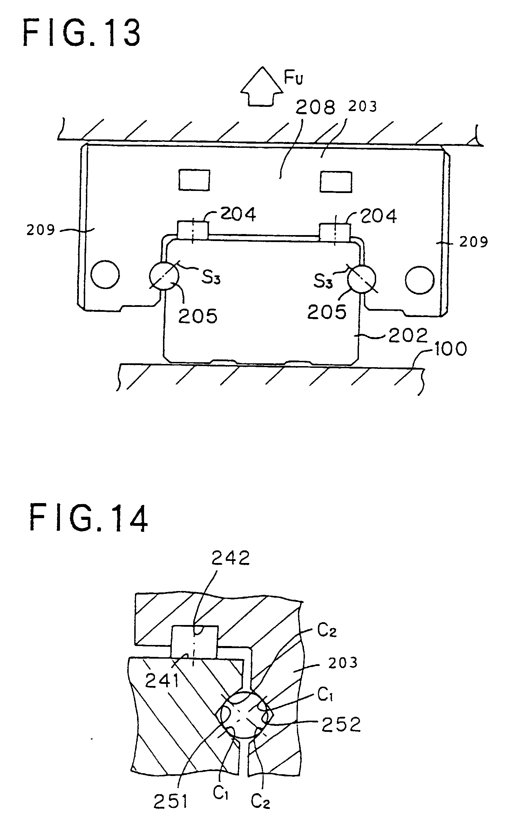

The loaded roller rolling surfaces 241, 241 are horizontal surfaces each having a plain surface. Each of the loaded ball rolling grooves 251, 251 is, so called, a circular-arc groove having a single circular-arc shape in section. Further, a cross sectional shape of the loaded ball rolling grooves 251 may also be formed so as to have, so called, a gothic-arch grooved shape having two circular-arcs as shown in FIG. 14.

The movable block 203 comprises a horizontal portion 208 opposing to the upper surface of the track rail 202 and skirt portions 209, 209 downwardly extending from the horizontal portion 208 and opposing to the right and left side surfaces of the track rail 202.

The lower surface of the horizontal portion 208 is formed with two lines of loaded roller rolling surfaces 242, 242 corresponding to the loaded roller rolling surfaces 241, 241 formed on the upper surface of the track rail 202. While each of inner side surfaces of the skirt portions 209 is formed with a loaded ball rolling groove 252 corresponding to the loaded ball rolling groove 251.

The loaded roller rolling surfaces 242, 242 formed on the lower surface of the horizontal portion 208 correspond to bottom surfaces of the roller grooves 210,210 having a rectangular shape in section, the roller rolling grooves 210, 210 are formed on the lower surface of the horizontal portion 208. The right and left side surfaces of the respective roller rolling grooves 210 are in parallel with each other, and the side surfaces constitute roller end surface guide walls 210a, 210a that oppose to the end surfaces of the upper surface side roller 204 with leaving a small gap therebetween. A depth of the roller rolling groove 210 is smaller than a radius of the upper surface side roller 204. In a case shown in figure, the depth is about a half of the radius of the upper surface side roller 204.

Each of the loaded ball rolling grooves 252 formed on the inner side surfaces of the skirt portions 209 is, so called, a circular-arc groove having a single circular-arc shape in section. Further, a cross sectional shape of the loaded ball rolling groove 252 may be formed so as to provide a gothic-arch grooved shape formed by combining two circular-arcs as shown in FIG. 14.

The upper surface side rollers 204 are interposed to be rollable between the loaded roller rolling surface 241 formed on the upper surface of the track rail 202 and the loaded roller rolling surface 242 formed on the lower surface of the horizontal portion 208 of the movable block 203. The side surface side balls 205 are interposed to be rollable between the loaded ball rolling groove 251 formed on the right and left side surfaces of the track rail 202 and the loaded ball rolling groove 252 formed on the skirt portions 209 of the movable block 203.

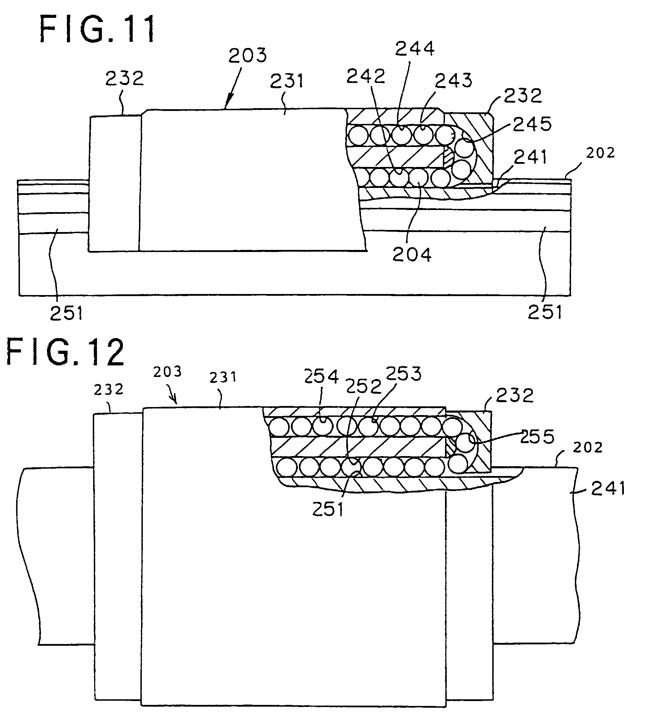

As shown in FIG. 11, the movable block 203 is provided with a roller returning passage 243 for returning the respective upper surface portion roller 204 from one end to the other end of the loaded roller rolling surfaces 242. Further, as shown in FIG. 12, the movable block 203 is provided with ball returning passages 253 for returning the respective side surface portion ball 205 from one end to the other end of the loaded ball rolling groove 252. The ball returning passages 243 and 253 constitute, so called, an unloaded region where a load is not applied to the ball 205.

The roller returning passage 243 comprises a roller escape bore 244 extending in parallel with the loaded roller rolling surface 241 and direction changing passages 245, 245 for changing a rolling direction of the roller 204 so as to trace U-shape by connecting an end portion of the loaded roller rolling surface 241 to an end portion of the roller escape bore 244.

As shown in FIG. 12, the ball returning passage 253 comprises ball escape bore 254 in parallel with the loaded ball rolling grooves 252 and direction changing passages 255, 255 for changing a rolling direction of the ball 205, so as to trace U-shape by connecting end portion of the loaded ball rolling groove 252 to end portions of the ball escape bore 254.

The movable block 203 comprises a block body 231 formed of metal and end plates 232, 232 attached to both end portions of the block body 231. The block body 231 is formed with the loaded roller rolling surface 242, the roller escape bores 244, the loaded ball rolling groove 252 and the ball escape bore 254, while each of the end plates 232 is formed with the roller direction changing passage 245 and the ball direction changing passage 255. Each of the roller escape bores 244 and 254 linearly passes through the block body 231.

As shown in FIG. 9, assuming that a contact angle line S1 is defined by normals of the loaded roller rolling surfaces 241 and 242, a contact angle α1, which is formed by the contact angle line S1 and a horizontal line H1 passing through a center of the roller 204, is set to almost 90 degrees. The roller escape bore 244 is provided on the contact angle line S1 of the roller 204. The upper surface side roller 204 is not limited to a cylindrical roller rolling on a plain surface, and the roller 204 may also be a barrel-shaped roller of which a cross section along a center axis has a circular-arc shape. In this case, the contact angle line S1 is defined as a line connecting the contact point at which the roller and the loaded roller rolling surfaces 241, 242 are contacted.

In FIG. 9, assuming that a contact angle line S2 is defined by a line connecting the contact points at which the side surface side ball 205 and the loaded ball rolling grooves 251 and 252 are contacted, the contact angle line S2 is downwardly inclined toward a center of the track rail 202. Each of the ball escape bores 254 takes the same elevation as that of the loaded ball rolling grooves 252. That is, the ball escape bore 254 is positioned on the horizontal line H2 passing through a center of the ball 205. Further, each of the horizontal lines H1, H2 is a line extending on a cross sectional area normal to the track rail 202 and extending in a direction parallel to the upper and lower surfaces of the track rail 202.

The contact angle α2, which is formed by the contact angle line S2 and the horizontal line H2, is set to be almost 45 degrees. Further, the contact angle α2 is not limited to 45 degrees, and may variously changed. For example, the contact angle may be changed within a range of 40 to 50 degrees.

It is preferable to set a radius of curvature of each of the loaded ball rolling grooves 251 and 252 to within a range of 0.52 times smaller than a diameter of the ball, and the radius of curvature may be more preferably set to within a range of 0.52-0.505 times smaller, thereby to impart a damping property. Even in a case where the contact angle becomes, for example, 45 to 60 degrees, a depth of each of the rolling grooves is set to a value within a range so that a contacting range of the ball and the loaded ball rolling groove would not interfere with a groove end periphery of the rolling groove.

When a load to be applied in a direction for pressing the horizontal portion 208 of the movable block 203 toward the track rail 202 is defined as a compressive load FR, the compressive load FR is received by all of six rows in total of rolling members consisting of two rows of rollers 204...204 disposed between the horizontal portion 208 of the movable block 203 and the upper surface of the track rail 202 and two rows of balls 205...205 disposed between the right and left skirt portions 209, 209 of the movable block 203 and both the side surfaces of the track rail 202. Accordingly, an allowable load for the device 201 with respect to the compressive load FR can be increased.

When the compressive load FR is applied, the skirt portions 209 are deformed in a direction so as to be opened. That is, the skirt portions 209 are deformed in a direction for separating from the track rail 202. Accordingly, it becomes possible to stabilize a distribution of the loads to be born by the respective rollers 204...204 disposed at the upper surface side of the track rail 202 and balls 205...205 disposed at the side surface side of the track rail 202.

That is, in the linear motion guide device 201, it is ideal that all of the rollers 204...204 disposed at the upper surface of the track rail 202 and the balls 205...205 disposed at the side surfaces of the track rail 202 are simultaneously contacted to the track rail 202 and the movable block 203 thereby to support the load. However, in actual, for example, the balls 205...205 disposed at the side surfaces of the track rail 202 are contacted in advance to the track rail 202 and the movable block 203 due to an assembling error or the like. As a result, the rollers 204...204 are lifted up thereby to cause, so called, a non-uniformly contacting state.

Even in such a case, when the compressive load FR is applied, the skirt portions 209, 209 are deformed to be opened by the contacting counter force of the balls 205 disposed at the side surfaces of the track rail 202, and the horizontal portion 208 is deformed to be recessed. Therefore, the rollers 204...204 disposed at the upper surface of the track rail 202 securely receive the compressive load FR. As a result, the load distribution can be stabilized.

A lateral load FT is received by the balls 205...205 disposed between the side surfaces of the track rail 202.

Further, when a tension load FU is applied in a direction for separating the horizontal portion 208 of the movable block 203 from the upper surface of the track rail 202, the contact points at which the side surface side balls 205 and the loaded ball rolling grooves 251 and 261 are contacted are displaced, so that the contact angle line S3 is upwardly inclined toward the track rail 202 as shown in FIG. 13. Under this condition, the tension load FU is supported.

In case of the gothic-arch groove, as shown in FIG. 14, the contact points are displaced from the first circular-arc C1 to the second circular arc C2 of the respective loaded ball rolling grooves 251 and 252.

Accordingly, the device has an ability to bear the lateral load FT and the tension load FU in a direction for separating the horizontal portion 208 of the movable block 203 from the upper surface of the track rail 202. In addition, it becomes possible to increase the allowable load with respect to the compressive load FR in a direction for pressing the horizontal portion 208 of the movable block 203 against the upper surface of the track rail 202.

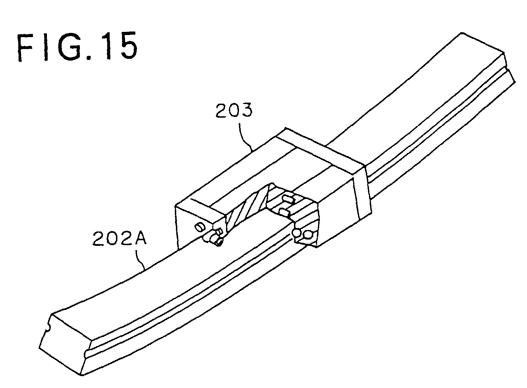

Although the present invention has been explained in the case where the track rail 202 is a linear rail, as shown in FIG. 15, the present invention is also applicable to a curve-motion guide device having a track rail 202A which is vertically bent so as to provide a circular-arc shape. The curve-motion guide device is different from the linear motion guide device in a point of having a function of determining a characteristic frequency of a building on the basis of a radius of the track rail 202A regardless of weight of the building.

In this case, the upper and lower surfaces of the track rail 202A are bent so as to provide a circular-arc shape, while the side surfaces thereof are positioned in a vertical surface. The lower surface of the horizontal portion 208 of the movable block 203, which opposes to the upper surface of the track rail 202A, is bent in a circular-arc shape so as to form a concentric circle with respect to the upper surface of the track rail 202. The loaded roller rolling surfaces 241 and 242 (see FIG. 9) in which the upper surface side rollers 204 are rolling are bent so as to have a circular-arc shape along the upper surface of the track rail 202 and the lower surface of the horizontal portion 208 of the movable block 203. The loaded ball rolling grooves 251 and 252 (see FIG. 9) in which the side surface side balls 205 are rolling are bent so as to provide a circular-arc shape on a vertical surface.

In the same manner as the guide mechanism shown in FIG. 8, the present invention can also be applied to a guide mechanism in which two sets of the curve motion guide devices are combined.

The arrangements and functions of elements or parts of the curve-motion guide device shown in FIG. 15 other than those described above are substantially the same as those in the linear motion guide device shown in FIGs. 9 to 12. Therefore, these elements or parts are not described herein by adding the same reference numerals to the corresponding elements or parts.

## Claims

1. A rolling motion guide device comprising:
a track rail having an upper surface and both side surfaces each of which is formed with a loaded rolling member rolling portion;
a movable block having a horizontal portion and skirt portions, each of the horizontal portion and the skirt portions is formed with a loaded rolling member rolling portion corresponding to the loaded rolling member rolling portion formed on the track rail; and
a number of rolling members disposed to be rollable between the loaded rolling member rolling portion formed on the track rail and the loaded rolling member rolling portion formed on the movable block;
wherein a contact angle line, which is defined as a line connecting contact points at which each of the rolling members disposed to each side surface of said track rail and a pair of loaded rolling member rolling portions clamping the rolling member are contacted when a compressive load is applied to the movable block and the track rail, is downwardly inclined toward the track rail.

2. A rolling motion guide device according to claim 1, wherein a plural rows of balls are provided as rolling members to be interposed between the upper surface of the track rail and the horizontal portion of the movable block, and a loaded rolling member rolling portion clamping the balls is formed as a loaded ball rolling groove; and
wherein at least one row of balls is provided as rolling members to be interposed between the side surfaces of the track rail and the skirt portions of the movable block and a loaded rolling member rolling portion clamping the balls is formed as a loaded ball rolling groove.

3. A rolling motion guide device according to claim 1, wherein a plural rows of rollers are provided as rolling members to be interposed between the upper surface of the track rail and the horizontal portion of the movable block and a loaded rolling member rolling portion clamping the rollers is formed as a loaded roller rolling surface; and
wherein at least one row of balls is provided as rolling member to be interposed between the side surfaces of the track rail and the skirt portions of the movable block and a loaded rolling member rolling portion clamping the balls is formed as a loaded ball rolling groove.

4. A rolling motion guide device according to claim 2 or 3, wherein at least one loaded ball rolling groove is formed to be a circular-arc groove having a single circular-arc shape in section.

5. A rolling motion guide device according to claim 2 or 3, wherein at least one loaded ball rolling groove is formed to be a gothic-arch groove in a cross sectional shape by combining two circular-arcs.

6. A rolling motion guide device according to any one of claims 1 to 5, wherein said track rail is formed as a linear rail.

7. A rolling motion guide device according to any one of claims 1 to 5, wherein said track rail is formed as a curved rail formed by bending a rail in a vertical direction so as to provide a circular-arc shape.
